# EUROPEAN PATENT APPLICATION

(11) **EP 1 806 950 A2**
(43) Date of publication of application: **11.07.2007**
(21) Application number: 07106510.6
(22) Date of filing: 27.02.2004
(51) Int. Cl.: H04Q 7/38

(54) **Method, System and Device for Provisioned Talkgroup Identifier Discovery**

(62) Divisional of application: 04251152.7
(71) Applicant: Research In Motion Limited, Waterloo, Ontario N2L 3W8 (CA)
(72) Inventor: Rao, Krishna, Kanata Ontario K2W 1C4 (CA); Sing Janus, Yau, Ottawa Ontario K1Y 0N9 (CA)
(74) Representative: Rickard, David John

(57) **Abstract**

A method, system, network and user device are provided for provisioned talkgroup identifier discovery in a dispatch or similar network, in which a user is provided with a list of talkgroups provisioned for the user device. In some embodiments, the user device obtains from the network a user-device specific set of talkgroup identifiers having a respective provisioned talkgroup identifier for each of at least one talkgroup provisioned for the user device. Obtaining from the network the user-device specific set of talkgroup identifiers comprises receiving an update in respect of the user-device specific set of talkgroup identifiers when there has been a change to the user-device specific set.

## Description

The invention relates generally to wireless communication systems and more particularly to providing provisioned talkgroup identifier information to user devices.

In wireless communication systems which provide group call dispatch services, a user device may have a number of talkgroups which it may join in an active session. The specific predetermined talkgroups which the user device is permitted to join are known as the provisioned talkgroups of the user device. Each talkgroup is identified by a talkgroup identifier or talkgroup ID which often takes the form of an index. In order for a user using the user device to join a talkgroup, the user typically must input the particular talkgroup identifier of the provisioned talkgroup the user wants the device to join.

An example of a system providing group call dispatch services is the iDEN™ system of Motorola^{™} which provides dispatch services including walkie-talkie-like functionality such as push-to-talk^{™} (PTT^{™}). When referred to herein, walkie-talkie functionality and half-duplex communication functionality which at any one time is capable of transmitting voice communication from a talking or transmitting party's device to a listening or receiving party's device, but cannot simultaneously transmit voice communication from the receiving party's device to the talking party's device, while the talking party's device is transmitting voice to the receiving party's device.

### GENERAL

A user of a user device is normally informed of the user device's provisioned talkgroups and provided with a list of the talkgroup identifiers in the form of indices at the time of service activation (activation occurring once, when a user initially subscribes to the service). However, it may be the case that a user is unaware of or forgets the user device's provisioned talkgroups and the identifiers thereof.

A user who is unaware of or forgets after service activation the provisioned talkgroup identifiers of the user's device can call a carrier customer call center and ask for the list. Another opportunity to obtain the list is may be afforded a user who calls the carrier customer call center to subscribe to an additional group.

This may cause frustration and delays and is increasingly problematic as the number of provisioned talkgroups for the user device increases.

Embodiments of the present invention attempt to mitigate the inconvenience and/or inefficiency caused by a user only being informed of his/her provisioned talkgroup IDs during service activation or when he or she contacts a carrier customer care center. In accordance with the preferred embodiments discussed below, methods, systems and a novel user device, may be used to automatically provide a user of the user device a list of provisioned talkgroup IDs, or otherwise provide the user device with an identification of the provisioned talkgroup identifiers. In preferred embodiments of the invention, this information is retrieved over-the-air (OTA). While PTT^{™} networks and wireless devices are employed in the examples described below, more generally embodiments of the invention are applicable in the context of any networks and wireless devices participating in network delivered walkie-talkie-like communications, PTT being but one example. A network capable of delivering this will be referred to as a "dispatch network".

The present invention may provide a method, system, network and user device for provisioned talkgroup identifier discovery in a dispatch or similar network, in which a user is provided with a list of talkgroups provisioned for the user device. In some embodiments the provision of the information may be provided by a new message automatically sent from the network to the user device at a specific time.

According to one broad aspect, the invention may provide a method in a user device that is capable of walkie-talkie-like functionality and is adapted to participate in half-duplex calls through a network, the method comprising: obtaining from the network a user-device specific set of talkgroup identifiers having a respective provisioned talkgroup identifier for each of at least one talkgroup provisioned for the user device; wherein obtaining from the network the user-device specific set of talkgroup identifiers comprises receiving an update in respect of the user-device specific set of talkgroup identifiers when there has been a change to the user-device specific set.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Preferred embodiments of the invention will now be described with reference to the accompanying diagrams, in which:
FIG. 1 is a block diagram depicting elements of a communications system participating in provisioned talkgroup identifier discovery according to an embodiment of the invention;
FIG. 2 is a flow diagram illustrating the steps performed by the user device for provisioned talkgroup identifier discovery according to one network query based embodiment of the invention;
FIG. 3A is a block diagram representation of a datagram according to another embodiment of the invention for the provisioned talkgroup identifier request;
FIG. 3B is a block diagram representation of a datagram according to a further embodiment of the invention for the talkgroup identifier list update message;
FIG. 3C is a block diagram representation of a datagram according to another embodiment of the invention for the provisioned talkgroup identifier request;
FIG. 3D is a block diagram representation of a datagram according to a further embodiment of the invention for the talkgroup identifier list update message;
FIG. 4 is a flow diagram illustrating the steps performed by a network for provisioned talkgroup identifier discovery according to another network query based embodiment of the invention;
FIG. 5 is a flow diagram illustrating the steps performed by a user device for provisioned talkgroup identifier discovery according to a network registration based embodiment of the invention;
FIG. 6 is a block diagram representation of a datagram according to a further embodiment of the invention for the enhanced registration accept message;
FIG. 7 is a flow diagram illustrating the steps performed by a network for talkgroup identifier discovery according to another network registration based embodiment of the invention;
FIG. 8 is a flow diagram illustrating the steps performed by a user device for talkgroup identifier discovery according to one handheld based embodiment of the invention; and
FIG. 9 is a block diagram representation of a talkgroup test memory store according to another embodiment of the invention for organizing and storing success or failure of join group requests by the user device by talkgroup identifier.

### DESCRIPTION OF PREFERRED EMBODIMENTS

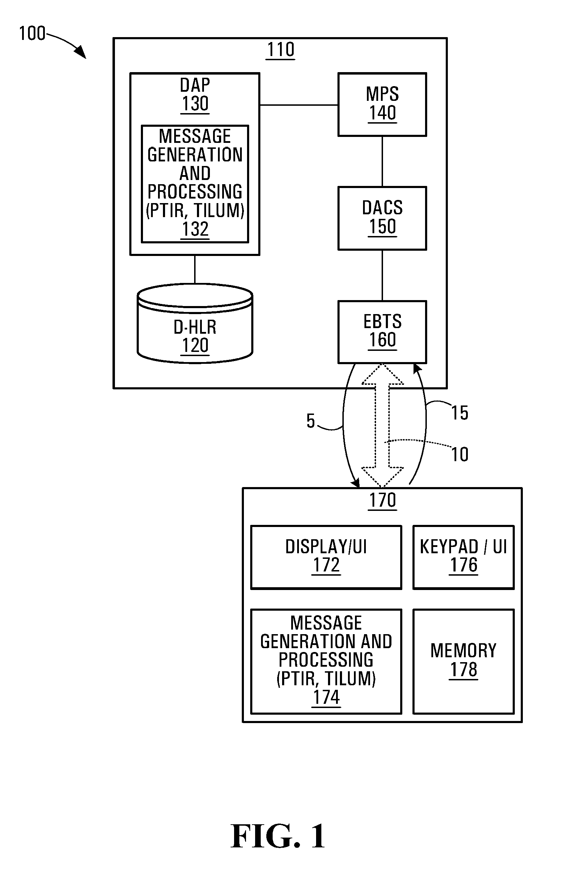

Referring to Figure 1, elements of a communications system participating in provisioned talkgroup identifier discovery according to an embodiment of the invention, will now be discussed.

A communications system, generally shown by reference numeral 100, is depicted in Figure 1, and is a modified iDEN^{™} system which includes a dispatch network 110 and user device 170 adapted in accordance with one possible implementation of the invention. In the implementation depicted in Figure 1, the user device 170 is a wireless user device. The dispatch network 110 provides dispatch services including push-to-talk (PTT^{™}) dispatch group calling services. A dispatch application processor (DAP) 130 is the processing entity responsible for the overall coordination and control of dispatch services in the iDEN^{™} system. The DAP 130 is coupled to a dispatch home location register (D-HLR) 120 which is a repository of data for dispatch calling identification and services. In some implementations the D-HLR 120 is resident on the DAP 130. The DAP 130 is coupled to a metro packet switch (MPS) 140 which is in turn coupled to a digital access cross connect switch (DACS) 150. The DACS 150 in turn is coupled to an enhanced base transceiver station (EBTS) 160. The EBTS 160 communicates with user devices over the air (OTA), and in the dispatch network, over outbound and inbound half duplex voice communication channels 5 and 15 respectively, over a dedicated control channel (DCCH) 10, and over other existing channels (not shown). As will be discussed below, various embodiments of the invention use the DCCH 10 to send and receive messages associated with provisioned talkgroup identifier discovery. In the course of providing coordination and control of dispatch calls, the DAP 130 may retrieve information from the D-HLR 120 regarding the various services and or identifications including provisioned and selected talkgroups of a user device at any one time. In the course of communicating with the user device, the DAP 130 sends messages via the MPS 140, the DACS 150, and the EBTS 160 in order to interact with the user device 170.

According to an embodiment of the invention, the DAP 130 also has message generating and processing 132 which is adapted to respond to a PTIR (provisioned talkgroup identifier request) with a TILUM (talkgroup identifier list update message), both described in detail below. In a preferred embodiment, the message generation and processing 132 is implemented as a change to software already implemented on the DAP 130, but it may be implemented as separate software, hardware, firmware or a combination of these types of functionality. Figure 1 shows a very specific example of network functionality which provides dispatch communications services. The arrangement of Figure 1 is particularly suitable for iDEN^{™} applications. It is to be clearly understood that other network side implementations may be employed for delivering the talkgroup identifier discovery methods described herein. These other implementations may be specific to iDEN^{™} or to other dispatch service implementations. The dispatch service may of course include additional system components not shown in Figure 1.

In the illustrated example, the user device 170 has a display 172 or other user interface for presenting information to a user including but not limited to the talkgroup identifiers, and has a keypad 176 or other user interface for receiving input from the user including but not limited to a request for updating the talkgroup identifiers. Also shown is message generation and processing 174 which is responsible for generating the PTIR, and for processing a TILUM received in response to the request. In a preferred embodiment, the message generation and processing 174 is implemented as a change to software already implemented on the user device, but it may be implemented as separate software, hardware, firmware or a combination of these types of functionality. Finally, a memory 178 is shown in which is stored the list of talkgroup identifiers. Preferably, this is part of memory already implemented on the user device. Figure 1 shows a very specific implementation for a user device capable of implementing the talkgroup identifier discovery methods provided by embodiments of the invention. It is to be clearly understood that the particular arrangement of components of Figure 1 is only one example. The user device may of course include additional components not shown in Figure 1.

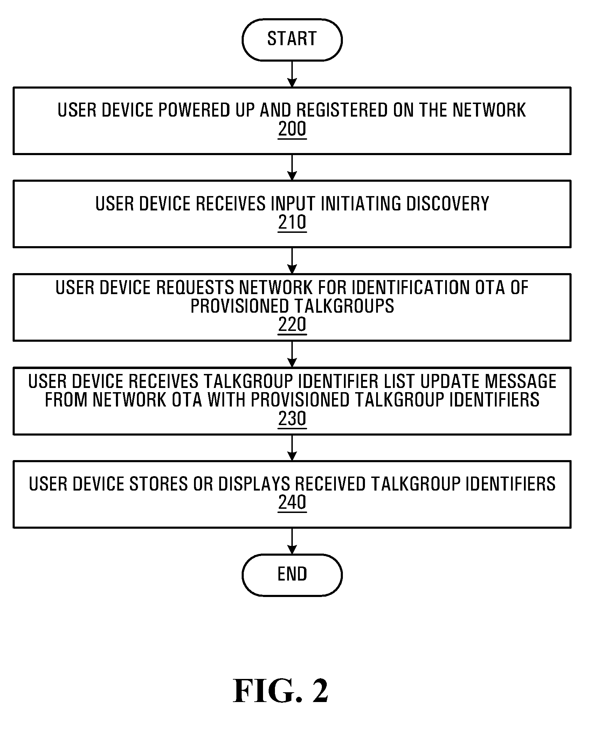

Referring now to Figure 2, the steps performed by the user device for provisioned talkgroup identifier discovery (PTID) according to one network query based embodiment of the invention, will now be discussed.

In this network query based embodiment, the communications system provides to the user device identifiers of the talkgroups in response to a query or request. In this embodiment the user device initiates PTID, however both the user device and the network are adapted to participate in PTID.

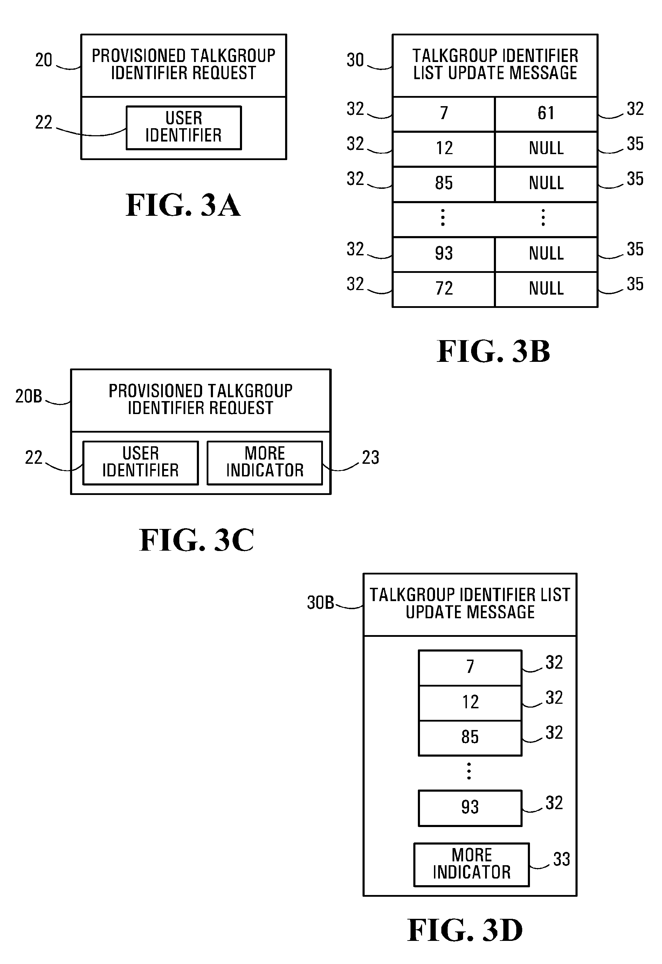

At step 200, a user device is powered up, and registered with the network. For example if the system is an IDEN^{™} system there is a standard procedure for doing this. In the case where a user has forgotten or lost the identification of the talkgroups the user's device has provisioned, the user can initiate the process of PTID by making a selection from the user device user interface which could include but is not limited to a menu selection, a press of a button, or otherwise any other input which is adapted to indicate to the user device that the user wishes to initiate PTID. This occurs at step 210 in which the user device receives input initiating discovery via a user interface. At step 220 the user device requests an identification over the air of provisioned talkgroups for example by transmitting a PTIR message. In an IDEN^{™} system this request might be processed by a DAP for example. The user device does this by sending a datagram or request message which may take a form similar to the example format depicted in Figure 3A described in more detail below. Preferably the datagram associated with the embodiment of Figure 2 includes an identification that the request message is a request for information listing all of the provisioned talkgroups of the user device, and also preferably includes an identification of the user device for helping the network retrieve the proper information. The next step the user device performs is the receipt of a response from the network, for example a TILUM, which may take a form similar to that of the example format depicted in Figure 3B described in more detail below. In a preferred embodiment, the message sent by the network to the user device in step 230 includes the list of talkgroup identifiers provisioned for the particular user device. Once the user device has received the identification of the provisioned talkgroups, the user device at step 240 may store or display the received talkgroup identifiers. In a preferred embodiment the user may be able to select whether or not the information is stored or displayed or both. Although there are many ways in which a number of identifiers may be displayed, according to a preferred embodiment the list is displayed on a visual user interface which could for example be an LCD display. More generally, information pertaining to the provisioned talkgroup identifiers is made available to a user of the device. For example, according to yet another preferred embodiment, the user device has a stored address book or alias list which may for example be provided by the user or a carrier, which may be used to store a name associated with each talkgroup identifier, which may often comprise a number. The name is preferably a more human friendly term which is descriptive of the talkgroup's function or members. Example talkgroup identifiers are discussed in more detail in association with other various embodiments of the invention.

In an additional embodiment, a dispatch network (for example, but not limited to that depicted in Figure 1) and particularly a user device (for example, but not limited to that depicted in Figure 1), are adapted to respectively support and perform the functions illustrated in the steps of the flow diagram of Figure 2.

Referring to Figure 3A, an example of a datagram which may be used for the provisioned talkgroup identifier request, will now be discussed. The particular request is generally indicated by 20. The message indicates inherently or explicitly to the network what is requested, and by the inclusion of a user identifier 22 (for example an urban fleet member id (UFMI) for iDEN^{™} systems), communicates to the network the particular user device which is requesting a list of provisioned talkgroups. According to some embodiments of the invention, the PTIR 20 is a new message defined within an existing communications system itself, like the iDEN^{™} system. In a preferred embodiment in which the system itself is modified, the PTIR 20 message could be a new layer 3 message adapted for a dedicated control channel (DCCH).

The PTIR message is sent over an implementation-specific control, messaging or traffic channel to effect delivery and a response to the request. In the event the channel is user device specific, it is not necessary to include a user identifier as the network can figure that out from the channel over which the request is received.

Referring to Figure 3B, an example of a datagram which may be used for a TILUM is generally indicated by 30. The message 30 indicates inherently or explicitly to the user device what the message is, and includes a list of all provisioned talkgroup identifiers 32 of the user device, provides to the user device the information it requested. In the structure illustrated, the TILUM 30 has a fixed size. This is achieved by padding the structure with NULL entries 35 until the fixed size is ready. In an embodiment implementing the fixed size, the number of possible values which can be stored in the TILUM 30 is equal to the maximum number of talkgroups that may be provisioned for a single user device. A fixed size TILUM does have the drawback of wasting bandwidth for NULL entries 35 in the list while at the same time avoiding processing which may be required for variable length TILUMs of other embodiments. In preferred embodiments, the TILUM is of variable size, including a field (not shown) to indicate the size or number of entries in the list, the entire structure being large enough to contain the list. In a variable size TILUM containing the same list as that shown in Figure 3B, the entries of NULLs 35 in Figure 3B would not be included and information indicating the size of the list would be included in an additional field. The particular structures used to effect useful transmission of the provisioned talkgroup identifiers will depend upon the capacities of the particular system in which it is implemented and the nature of the identities themselves. According to some embodiments of the invention, the TILUM 30 is a new message defined within an existing system, like the iDEN^{™} system. In a preferred embodiment in which the system itself is modified, the TILUM 30 message in the iDEN^{™} system could be a layer 3 message adapted for a dedicated control channel (DCCH).

The TILUM is sent over an implementation-specific control, messaging or traffic channel to effect delivery and receipt of the information requested by the user device.

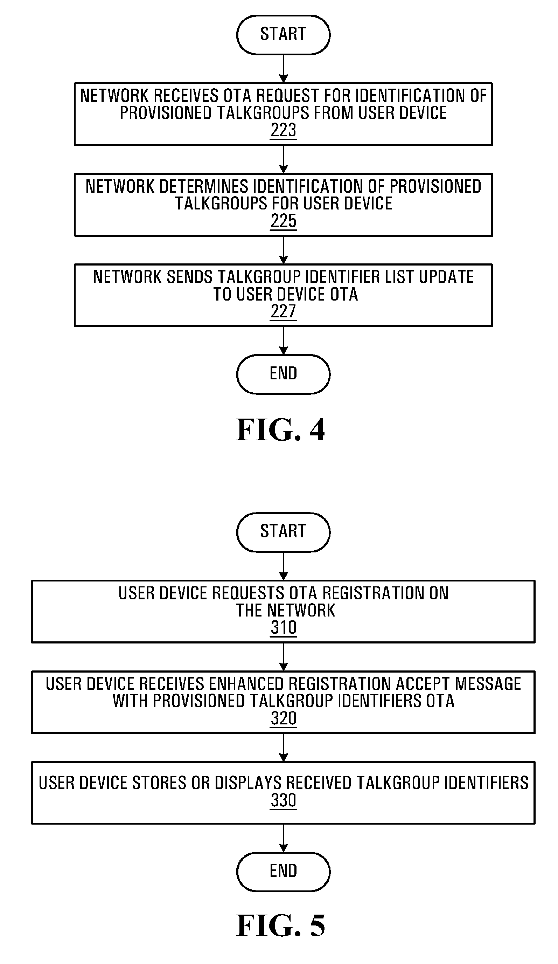

Referring to Figure 4, the steps performed by a dispatch network for provisioned talkgroup identifier discovery according to another network query based embodiment of the invention will now be discussed. In this embodiment, the communications system provides to the user device identifiers of the talkgroups in response to a request.

The method begins at step 223 with the network receiving over the air a request for the identification of provisioned talkgroups from the user device (i.e. the network receives the PTIR). In an iDEN^{™} implementation, this might for example be received and forwarded to the DAP. In step 225, the network determines the identification of the provisioned talkgroups for the user device which generated the request. For example, in an iDEN^{™} implementation such as shown in Figure 1, this may involve the DAP querying the D-HLR for this information. In step 227, the network sends the talkgroup identifier list update message to the user device over the air. This message might for example be generated by the DAP in iDEN^{™} implementations.

Referring now to Figures 3C and 3D, it should be noted that in some embodiments, a TILUM 30B which may contain a partial list of talkgroup identifiers is utilized to reduce the size of each message sent over the air. The TILUM 30B is arranged so that it is capable of containing a fixed number of provisioned talkgroup identifiers 32. This fixed number is preferably smaller than the largest number of talkgroups provisioned for any one user, but larger than the average number of talkgroups provisioned per user. Accordingly, in this embodiment, the TILUM 30B is a relatively smaller structure, providing storage for the fixed number of talkgroup identifiers 32, and including an additional "more indicator" field 33 which indicates whether the user has more talkgroups provisioned than that included in the TILUM 30B. Correspondingly, a PTIR 20B in such an embodiment may also include a "more indicator" 23 to indicate to the network that another set of talkgroup identifiers 32 in an additional TILUM 30B is required.

With regard to a method similar to that depicted in Figure 4, in which a network utilizes TILUMs 30B with a "more indicator" 33, after receiving a PTIR 20B from the user device, the network generates a TILUM 30B containing a fixed number of talkgroup identifiers 32 along with a "more indicator" 33 indicating that more talkgroup identifiers 32 are to be provided.

With regard to a method similar to that depicted in Figure 2, for a user device to utilize a TILUM 30B, if the "more indicator" 33 in the TILUM 30B received from the network indicates there are more talkgroup identifiers 32 to be provided, the user device makes another PTIR 20B of the network.

Similarly, in another embodiment, if the network receives a subsequent TILUM 30B within a certain period of time after sending a first TILUM 30B with a "more indicator" 33, the network sends a respective subsequent TILUM 30B containing a list of the next fixed number of talkgroup identifiers 32. The last TILUM 30B containing the last talkgroup identifiers 32 will have a "more indicator" 33 set to a value indicating that there is no more, and accordingly no subsequent PTIR 20B is sent to the network from the user device at that time.

Referring to Figure 5, the steps performed by a user device for provisioned talkgroup identifier discovery according to a network registration based embodiment of the invention, will now be discussed. In this embodiment, a communications system provides to the user device identifiers of the talkgroups every time the user device sends a network registration request.

This method starts with the user device powering up at step 300. At step 310 the user device requests registration on the network over the air. At step 320, the user device receives an enhanced registration accept message (or other appropriate registration acceptance message) which contains the provisioned talkgroup identifiers. Preferably, the provisioned talkgroup identifiers are appended to the registration accept message, and no portion of the conventional registration accept message is replaced. This message is received over the air. At step 330, the user device stores and/or displays the received talkgroup identifiers 330 for use by a user of the device.

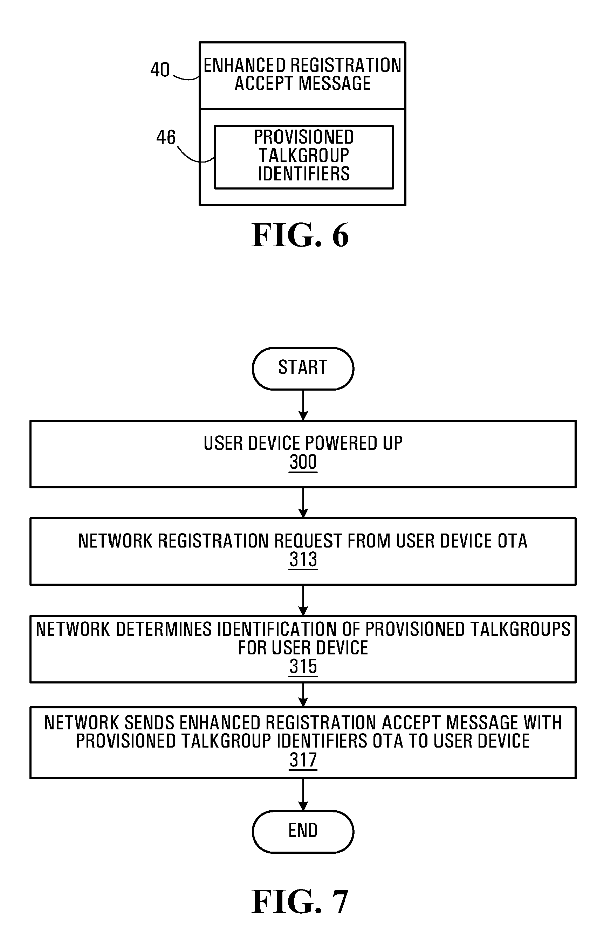

Referring to Figure 6, an example of a datagram according to a further embodiment of the invention for the enhanced registration accept message, will now be discussed.

The enhanced registration accept message, generally indicated at 40, includes a number of various identifiers and network variables for facilitating registration of communication with the user device and for verifying at the user device that registration was successful (not shown). It may include other types of fields which are conventional to a particular registration accept message within a system in which it is used. For this embodiment however, in addition to these types of fields, the message also includes the provisioned talkgroup identifiers 46, these not being included in conventional registration accept messages.

Referring to Figure 7, the steps performed by a network for talkgroup identifier discovery according to another network registration based embodiment of the invention, will now be discussed. In this embodiment a communications system provides to the user device identifiers of the talkgroups every time the user device sends a network registration request.

The method starts at step 313 with the network receiving a registration request from the user device over the air. More generally, any appropriate registration message might be received in this step. In an iDEN^{™} system, this message might be forwarded to the DAP. Next, at step 315, the network determines the provisioned talkgroups for the user device from which the registration request message was received. For example, in an iDEN^{™} implementation this might involve the DAP querying the D-HLR for this information. At step 317, the network sends an enhanced registration accept message containing the provisioned talkgroup identifier over the air to the user device. This message might for example be generated by the DAP if the network is an iDEN^{™} network.

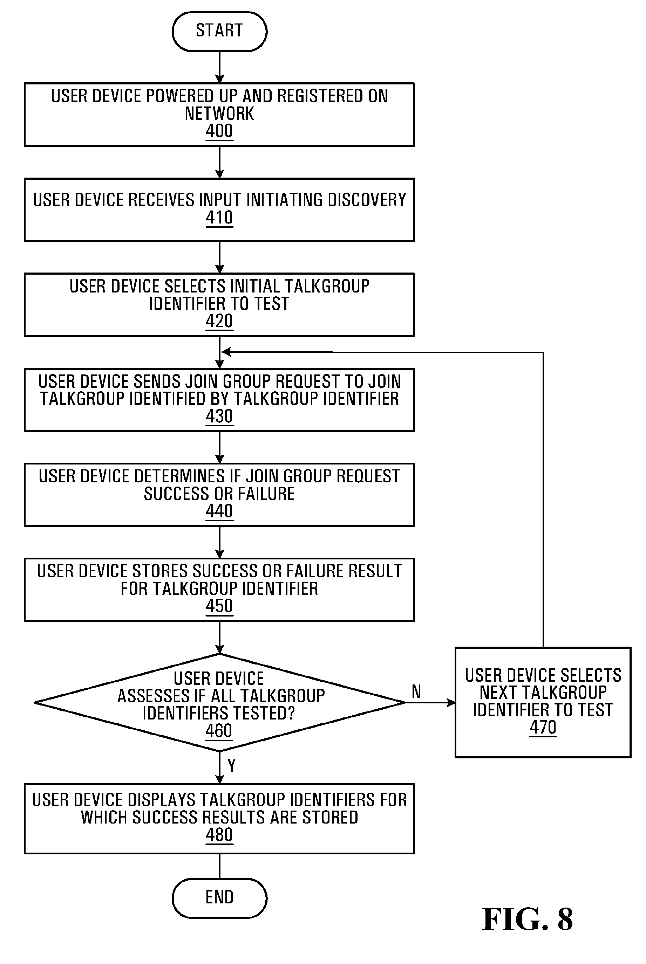

Referring to Figure 8, the steps performed by a user device for talkgroup identifier discovery according to another embodiment of the invention, will now be discussed. In this embodiment, the user device determines the identifiers of the talkgroups by automatically attempting to join various talkgroups, and storing the results by talkgroup identifier. In this embodiment, there is no requirement to make any changes whatsoever on the network side. The method is entirely implemented in the user device.

The method begins at step 400 with the user device powering up and registering with the network. At step 410, the user device receives an input requesting the initiation of talkgroup identifier discovery. This input might be from a user of the device via any appropriate user interface. Alternatively, the input might be simply the powering on of the device as took place at step 400. At step 420, the user device selects an initial talkgroup identifier to test. At step 430, the user device sends a join group request message to join the talkgroup identified by the talkgroup identifier. A "Join group request" message is a message particular to the iDEN^{™} standards. Any other appropriate message for joining a particular talkgroup can alternatively be employed in different systems. At step 440, the user device determines whether or not the join group request method resulted in success or failure from the indication of registration success or failure in the registration accept message returned to the user device. At step 450, the user device stores information sufficient to identify whether a particular talkgroup is a provisioned talkgroup or not. This might for example involve storing for each talkgroup an indication of whether or not the request resulted in success or failure. Alternatively, the user device may simply store the talkgroup identifiers for the talkgroups which were successful. At step 460, if the user device has not assessed all of the talkgroup identifiers available for testing (no path) then at step 470 the user device selects a next talkgroup identifier to test and continue with the method at step 430. On the other hand, if at step 460 it is determined that all of the talkgroup identifiers have been tested, then at step 480 the user device displays and/or stores the talkgroup identifiers for which success results were achieved.

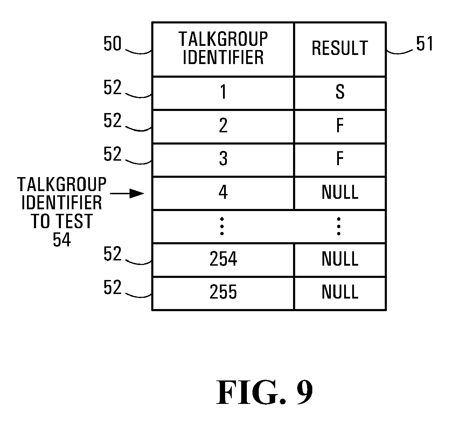

Referring to Figure 9, a talkgroup test memory store according to another embodiment of the invention for organizing and storing success or failure of join group requests by the user device by talkgroup identifier, will now be discussed.

In the example of Figure 9, a test memory store is shown having two columns 50,51. Column 50 contains the talkgroup identifiers, and column 51 contains the results for a corresponding talkgroup identifier. In the illustrated example, there are 255 possible talkgroup identifiers labelled 1 through 255. The results 51 are indicated by either an S for success or an F for failure. For a talkgroup which has not yet been tested, a null indication is indicated. In the illustrated example, talkgroup identifiers 1,2,3 indicated by 52 have been tested, and talkgroup identifier 4 is the next talkgroup identifier to test 54. It is to be understood that the structure of Figure 9 is only one particular example. Any appropriate information can be stored which will allow an identification of which talkgroups resulted in success. For example, if the table includes an entry for every possible talkgroup, then it would not be necessary to include an entry for the talkgroup identifier since that could be synonymous with the particular memory location.

In some embodiments, a variable size test memory store (not shown) similar to the test memory store of Figure 9 is utilized. The variable size test memory store is a variable sized list of talkgroup identifiers and includes an extra field which stores a value indicative of the size of the list or the number of entries in the list which correspond to talkgroup identifiers for which the join group request was successful. In such an embodiment, the variable size test memory store does not include any NULL pointers or failed talkgroup identifiers.

In some embodiments, the test memory store of Figure 9 may be updated or refreshed at any time upon the user initiating a subsequent request for the provisioned talkgroup id's.

In yet another embodiment, no specific PTIR is generated by the user device. Rather, on the network side, every time the user device connects to the network the network voluntarily generates the TILUM and sends this to the user device. In another embodiment, if there is any change to the list of talkgroups provisioned, a TILUM or an additional TILUM is generated.

In other embodiments, the method and system are adapted to provide peripheral support for a wired device which is capable of participating in wireless sessions with various talkgroups, and which has a number of talkgroups provisioned for it. Such a wired device participates via a network interworking function, so that although the wired device is not within the wireless network, it appears as though it is, and participates in a group call like a wireless device. Hence, according to these embodiments, the wired user device is provided with a list of talkgroups which have been provisioned for the device. For these embodiments, talkgroup discovery occurs in a manner analogous to the manner described hereinabove. Hence, a wired user device may request or be delivered the talkgroup indexes which are provisioned for it.

Numerous modifications and variations of the present invention are possible in light of the above teachings. It is therefore to be understood that within the scope of the appended claims, the invention may be practiced otherwise than as specifically described herein.

## Claims

1. A method in a user device (170) that is capable of walkie-talkie-like functionality and is adapted to participate in half-duplex calls through a network (110), the method comprising:
obtaining from the network (110) a user-device specific set of talkgroup identifiers (32, 46, 52) having a respective provisioned talkgroup identifier for each of at least one talkgroup provisioned for the user device (170);
wherein obtaining from the network (110) the user-device specific set of talkgroup identifiers comprises receiving an update in respect of the user-device specific set of talkgroup identifiers when there has been a change to the user-device specific set.

2. The method of claim 1 further comprising:
making information pertaining to the provisioned talkgroup identifiers (32, 46, 52) available to a user of the user device (170).

3. The method of claim 1 or claim 2 wherein the user-device specific set of talkgroup identifiers (32, 46, 52) obtained by the user device (170) has a respective provisioned talkgroup identifier for all talkgroups provisioned for the user device (170).

4. The method as claimed in any one of claims 1 to 3 wherein receiving an update in respect of the user-device specific set of talkgroup identifiers comprises receiving a message that provides an update of the user-device specific set.

5. The method as claimed in claim 4 wherein the message is a Talkgroup identifier List Update Message `TILUM'.

6. The method of any one of claims 1 to 5 wherein obtaining from the network (110) the user-device specific set of talkgroup identifiers (32, 46, 52) comprises:
transmitting to the network (110) a first message (20, 20B) to request the user-device specific set of talkgroup identifiers (32, 46, 52); and
receiving from the network (110) at least a second message (30, 30B) having the user-device specific set of talkgroup identifiers (32, 46, 52).

7. The method of claim 6 wherein the first message (20, 20B) and the second message (30, 30B) are layer 3 messages.

8. The method of claim 6 or claim 7 wherein the first message (20, 20B) transmitted to the network (110) to request the user-device specific set of talkgroup identifiers (32, 46, 52) is executed automatically upon the user device being powered on.

9. The method of any one of claims 1 to 8, wherein the user device (170) is a wireless device.

10. The method of any one of claims 1 to 9 wherein the user device (170) is compliant with an iDEN^{™} standard.

11. The method of any one of claims 1 to 10 wherein it is performed in a network that is adapted to provide half-duplex services to a plurality of user devices (170) that are capable of walkie-talkie-like functionality and the method is performed for each of said plurality of user devices (170).

12. A method in a network that is adapted to provide half-duplex services to user devices (170) that are capable of walkie-talkie-like functionality, the method comprising:
providing each user device (170) with a user-device specific set of talkgroup identifiers (32, 46, 52) having a respective provisioned talkgroup identifier (32, 46, 52) for each of at least one talkgroup provisioned for the user device (170);
wherein providing each user device (170) with the user-device specific set of talkgroup identifiers comprises automatically updating each user device (170) in respect of the user-device specific set of talkgroup identifiers for the user device when there has been a change in the user-device specific set.

13. The method of any one of claim 12 wherein the user-device specific set of talkgroup identifiers (32, 46, 52) provided to the user device (170) has a respective provisioned talkgroup identifier for all talkgroups provisioned for the user device (170).

14. The method of claim 12 or claim 13 further comprising:
for each user device, maintaining a list of each talkgroup provisioned for the user device (170);
wherein automatically updating each user device (170) in respect of the user-device specific set of talkgroup identifiers for the user device comprises providing each user device (170) with an update upon a change to the list of each talkgroup provisioned for the user device (170).

15. The method of any one of claims 12 to 14 wherein automatically updating each user device (170) in respect of the user-device specific set of talkgroup identifiers for the user device when there has been a change in the user-device specific set comprises sending a message that provides an update of the user-device specific set.

16. The method of claim 15 wherein the message is a Talkgroup Identifier List Update Message "TILUM".

17. The method of any one of claims 12 to 16 wherein providing each user device (170) with the user-device specific set of talkgroup identifiers (32, 46, 52) comprises for each user device:
receiving from the user device (170) a first message (20, 20B) to request the user-device specific set of talkgroup identifiers (32, 46, 52); and
sending to the user device (170) at least a second message (30, 30B) having the user-device specific set of talkgroup identifiers (32, 46, 52).

18. The method of claim 17 wherein the first message (20, 20B) and the second message (30, 30B) are layer 3 messages.

19. A computer readable medium having computer executable instructions stored thereon for execution on a processor of a computing device so as to cause said computing device to implement the steps of the method of any one of claims 1 to 18.

20. A user device (170) that is capable of walkie-talkie-like functionality and is adapted to participate in half-duplex calls through a network (110), the user device (170) being adapted to implement the steps of the method of any one of claims 1 to 11.

21. A network (110) that is adapted to provide half-duplex services to user devices (170) that are capable of walkie-talkie-like functionality, the network being adapted to implement the method of any one of claims 11 to 18.

22. A system comprising a network (110) according to claim 21 in combination with a plurality of user devices (170) according to claim 20.
